# EUROPEAN PATENT APPLICATION

(11) **EP 4 510 424 A1**
(43) Date of publication of application: **19.02.2025**
(21) Application number: 23818779.3
(22) Date of filing: 10.03.2023
(51) Int. Cl.: H02J 50/80

(54) **WIRELESS CHARGING METHOD FOR INTELLIGENT CABIN, AND INTELLIGENT CABIN AND STORAGE MEDIUM**

(30) Priority: 09.06.2022 CN 202210647242
(71) Applicant: ZTE Corporation, Shenzhen, Guangdong 518057 (CN)
(72) Inventor: ZHANG, Yongliang, Shenzhen, Guangdong 518057 (CN)
(74) Representative: Savi, Massimiliano
(86) International application number: PCT/CN2023/080823
(87) International publication number: WO 2023/236611

(57) **Abstract**

Disclosed in the present application are a wireless charging method for an intelligent cabin, and an intelligent cabin and a storage medium. The wireless charging method for an intelligent cabin is applied to the intelligent cabin. The intelligent cabin comprises a millimeter wave apparatus. The method comprises: performing positioning processing on terminals inside an intelligent cabin to obtain spatial position information of the terminals (S910); determining a first target charging terminal from among the terminals according to the spatial position information and a preset wireless charging rule (S920); and controlling a millimeter wave apparatus to transmit a millimeter wave wireless charging signal to the first target charging terminal for wireless charging processing (S930).

## Description

### CROSS-REFERENCE TO RELATED APPLICATION

This application is filed on the basis of Chinese patent application No. 202210647242.4 filed June 9, 2022, and claims priority to the Chinese patent application, the entire contents of which are incorporated herein by reference.

### TECHNICAL FIELD

The present disclosure relates to the technical field of charging, and in particular, to a wireless charging method for an intelligent cabin, an intelligent cabin, and a storage medium.

### BACKGROUND

Automobiles are an important transportation option for people when traveling. When a user needs to drive an automobile for a long journey, the driver and passengers in the automobile may not be able to replenish electric energy for their terminal devices (such as mobile phones and tablets) in time. When an emergency occurs, the driver and passengers will not be able to get in touch with the outside world promptly, resulting in adverse consequences.

In some cases, a charging port connected to a power supply battery of the automobile is generally arranged to provide charging for the driver and passengers, but the number of charging ports in the automobile is limited. When the driver and passengers in the automobile have a great demand for charging, the charging ports cannot meet the charging needs of the driver and passengers, and long-term use of the battery for charging will shorten the service life of the battery, or may even result in a problem that the quantity of electric energy in the battery is insufficient to start the automobile. Therefore, how to efficiently and stably charge terminal devices carried by the driver and passengers in an automobile is an urgent problem to be solved.

### SUMMARY

Embodiments of the present disclosure provide a wireless charging method for an intelligent cabin, an intelligent cabin, and a storage medium.

In accordance with a first aspect of the present disclosure, an embodiment provides a wireless charging method for an intelligent cabin, applied to an intelligent cabin including a millimeter wave apparatus. The method includes: performing positioning processing on at least one terminal device inside the intelligent cabin to obtain spatial position information of the at least one terminal device; determining a first target to-be-charged terminal device from the at least one terminal device according to the spatial position information and a preset wireless charging rule; and controlling the millimeter wave apparatus to transmit a millimeter wave wireless charging signal to the first target to-be-charged terminal device for wireless charging processing.

In accordance with a second aspect of the present disclosure, an embodiment provides an intelligent cabin, including: a memory, a processor, and a computer program stored in the memory and executable by the processor, where the computer program, when executed by the processor, causes the processor to implement the wireless charging method for an intelligent cabin in accordance with the first aspect.

In accordance with a third aspect of the present disclosure, an embodiment provides a computer-readable storage medium storing a computer-executable instructions which, when executed by a processor, causes the processor to implement the wireless charging method for an intelligent cabin in accordance with the first aspect.

### BRIEF DESCRIPTION OF DRAWINGS

FIG. 1 is a schematic diagram of a millimeter wave apparatus applied to an intelligent cabin according to an embodiment of the present disclosure;
FIG. 2 is a schematic diagram of a millimeter wave apparatus in a centralized configuration in an intelligent cabin of an automobile according to an embodiment of the present disclosure;
FIG. 3 is a schematic diagram showing the arrangement of a millimeter wave apparatus in an interior rearview mirror in an intelligent cabin of an automobile according to an embodiment of the present disclosure;
FIG. 4 is a schematic diagram of a millimeter wave apparatus in a centralized configuration in an intelligent cabin of an automobile according to another embodiment of the present disclosure;
FIG. 5 is a schematic diagram showing the operation of the millimeter wave apparatus in the centralized configuration in the intelligent cabin shown in FIG. 4;
FIG. 6 is a schematic diagram of millimeter wave apparatuses in a distributed configuration in an intelligent cabin of an automobile according to an embodiment of the present disclosure;
FIG. 7 is a schematic diagram showing the operation of the millimeter wave apparatuses in the distributed configuration in the intelligent cabin shown in FIG. 6;
FIG. 8 is a schematic diagram of a circuit structure of a millimeter wave apparatus using a millimeter wave antenna array according to an embodiment of the present disclosure;
FIG. 9 is a schematic flowchart of a wireless charging method for an intelligent cabin according to an embodiment of the present disclosure;
FIG. 10 is a schematic flowchart of S920 in FIG. 9;
FIG. 11 is a schematic flowchart of S1030 in FIG. 10;
FIG. 12 is a schematic flowchart of S930 in FIG. 9;
FIG. 13 is a schematic flowchart of a wireless charging method for an intelligent cabin according to another embodiment of the present disclosure; and
FIG. 14 is a schematic diagram of an intelligent cabin according to an embodiment of the present disclosure.

List of reference numerals: 101. driver; 102. passenger; 103. front passenger seat; 104. interior rearview mirror; 105. first millimeter wave apparatus; 106. second millimeter wave apparatus; 107. third millimeter wave apparatus; 108. fourth millimeter wave apparatus; 109. fifth millimeter wave apparatus; 201. reconfigurable intelligent surface; 1041. specular plate; 1042. non-specular plate; 1051. millimeter wave antenna array panel; 1052. wireless charging functional region; 1053. communication functional region; 1054. 2G/3G/4G/5G Sub6 antenna; 1055. main circuit board.

### DETAILED DESCRIPTION

To make the objectives, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

In the description of the present disclosure, the term "at least one" means one or more, the term "plurality of (or multiple) means two or more, the term such as "greater than", "less than", "exceed" or variants thereof prior to a number or a series of numbers is understood to not include the number adjacent to the term. In addition, although logical orders have been shown in the flowcharts, in some cases, the steps shown or described may be performed in an order different from the orders as shown in the flowcharts. In the description, claims, or accompanying drawings, the terms "first", "second", or the like are intended to distinguish between similar objects but do not indicate a specific sequence or a precedence order.

According to the embodiments of the present disclosure, an intelligent cabin performs positioning processing on at least one terminal device inside the intelligent cabin to obtain spatial position information of the at least one terminal device; then determines a first target to-be-charged terminal device from the at least one terminal device according to the spatial position information and a preset wireless charging rule; and controls a millimeter wave apparatus to transmit a millimeter wave wireless charging signal to the first target to-be-charged terminal device for wireless charging processing. In other words, in the embodiments of the present disclosure, the intelligent cabin controls the millimeter wave apparatus to automatically locate and wirelessly charge the terminal device(s) inside the intelligent cabin to realize a relatively stable, efficient, and convenient wireless charging process, thereby satisfying the charging demand of the terminal device(s) inside the intelligent cabin and improving the travel experience of the driver and passengers.

The embodiments of the present disclosure will be further described in detail below in conjunction with the accompanying drawings.

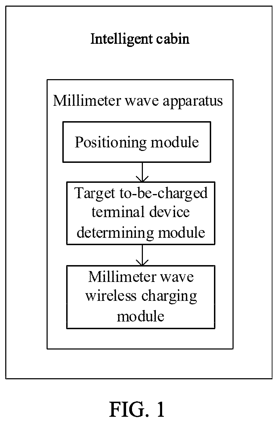

FIG. 1 is a schematic diagram of a millimeter wave apparatus applied to an intelligent cabin according to an embodiment of the present disclosure. In the example of FIG. 1, the millimeter wave apparatus is arranged in an intelligent cabin. The millimeter wave apparatus includes a positioning module, a target to-be-charged terminal device determining module, and a millimeter wave wireless charging module. The target to-be-charged terminal device determining module is respectively communicatively connected to the positioning module and the millimeter wave wireless charging module. It can be understood that there is also at least one terminal device (not shown in FIG. 1) in the intelligent cabin, and the millimeter wave apparatus is wirelessly connected to the at least one terminal device.

In an embodiment of the present disclosure, the positioning module is configured to perform positioning processing on the at least one terminal device inside the intelligent cabin through a millimeter wave beam to obtain spatial position information of the at least one terminal device, and send the spatial position information to the target to-be-charged terminal device determining module.

The target to-be-charged terminal device determining module is configured to receive the spatial position information of the at least one terminal device sent by the positioning module, determine a first target to-be-charged terminal device from the at least one terminal device according to the spatial position information and a preset wireless charging rule, and then send the first target to-be-charged terminal device to the millimeter wave wireless charging module.

The millimeter wave wireless charging module is configured to receive the first target to-be-charged terminal device sent by the target to-be-charged terminal device determining module, and transmit a millimeter wave wireless charging signal to the first target to-be-charged terminal device for wireless charging processing.

In an embodiment of the present disclosure, the intelligent cabin further includes a control processor. The intelligent cabin uses the control processor to control the millimeter wave apparatus to perform the same wireless charging process for the at least one terminal device in the intelligent cabin.

When traveling by commonly used means of transportation (e.g., an automobile or a high-speed train), the driver and passengers will inevitably face the problem that their mobile terminals cannot be charged in a timely manner due to insufficient charging ports in the cabin. According to an embodiment of the present disclosure, when the millimeter wave apparatus is arranged in the intelligent cabin, the intelligent cabin controls the positioning module to perform positioning processing on the at least one terminal device inside the intelligent cabin through a millimeter wave beam to obtain spatial position information of the at least one terminal device, and send the spatial position information to the target to-be-charged terminal device determining module. The target to-be-charged terminal device determining module receives the spatial position information of the at least one terminal device sent by the positioning module, determines a first target to-be-charged terminal device from the at least one terminal device according to the spatial position information and a preset wireless charging rule, and then sends the first target to-be-charged terminal device to the millimeter wave wireless charging module. The millimeter wave wireless charging module transmits a millimeter wave wireless charging signal to the first target to-be-charged terminal device for wireless charging processing. The intelligent cabin controls the millimeter wave apparatus to automatically locate and wirelessly charge the terminal device(s) inside the intelligent cabin, thereby satisfying the charging demand of the terminal device(s) inside the intelligent cabin and improving the travel experience of the driver and passengers.

Those having ordinary skills in the art may understand that the terminal device mentioned in the present disclosure includes, but not limited to, a mobile phone, a tablet computer, a Bluetooth headset, a Bluetooth speaker, and other devices, and the intelligent cabin provided with the millimeter wave apparatus includes, but not limited to, an automobile cabin, a high-speed train cabin, a train cabin, etc., which is not particularly limited in the present disclosure.

In an embodiment of the present disclosure, when the millimeter wave apparatus is applied to an automobile, the millimeter wave apparatus may be arranged in the intelligent cabin of the automobile in either of two configuration modes: a centralized configuration and a distributed configuration.

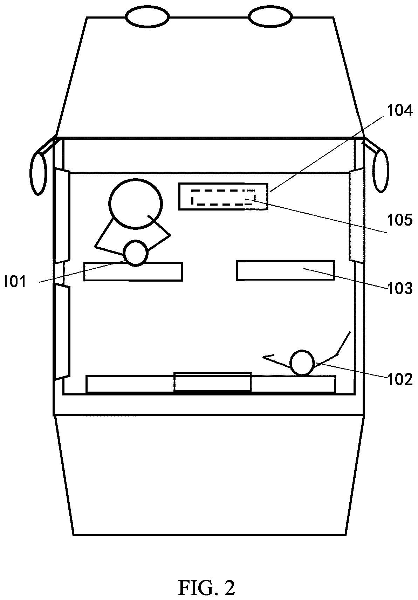

FIG. 2 is a schematic diagram of a millimeter wave apparatus in a centralized configuration in an intelligent cabin of an automobile according to an embodiment of the present disclosure. In the example of FIG. 2, there are a driver 101, a passenger 102, a front passenger seat 103, an interior rearview mirror 104, and the like in the intelligent cabin of the automobile, and a first millimeter wave apparatus 105 is arranged in a centralized configuration in the interior rearview mirror. The single first millimeter wave apparatus 105 in the rearview mirror can well automatically locate and wirelessly charge at least one terminal device in the intelligent cabin. The arrangement of the single millimeter wave apparatus can effectively reduce costs. In addition, the millimeter wave apparatus in the centralized configuration may be mounted above the driver on the top of and towards the interior of the vehicle, or may be arranged according to the actual internal space and layout of the intelligent cabin. It can be understood that FIG. 2 merely schematically illustrates the structure of the interior of the intelligent cabin of the automobile, and other components in the interior of the intelligent cabin will not be described in detail herein.

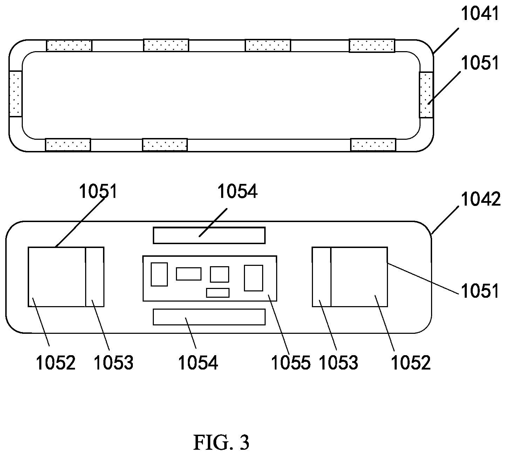

FIG. 3 is a schematic diagram showing the arrangement of a millimeter wave apparatus in an interior rearview mirror in an intelligent cabin of an automobile according to an embodiment of the present disclosure. FIG. 3 shows a schematic diagram illustrating that the first millimeter wave apparatus 105 in the centralized configuration is arranged in the interior rearview mirror. As shown in FIG. 3, the interior rearview mirror 104 includes a specular plate 1041 and a non-specular plate 1042. A millimeter wave antenna array panel 1051 is arranged on each of the specular plate and the non-specular plate of the interior rearview mirror 104. In an embodiment of the present disclosure, a plurality of millimeter wave antenna array panels 1051 having a small area are distributed at an edge of the specular plate. A small part of the millimeter wave antenna array panels 1051 are responsible for communication, and most of the millimeter wave antenna array panels 1051 are reserved for wireless charging purposes. A centralized large-area millimeter wave antenna array panel 1051 is arranged at each of a left end and a right end on the non-specular plate. Two functional regions, namely, a communication functional region 1053 and a wireless charging functional region 1052, are defined in the millimeter wave antenna array panel 1051 (where the larger functional region is generally used for wireless charging). Generally, the millimeter wave antenna array panel or the functional region thereof preset for communication or wireless charging purposes operates according to the preset function. The millimeter wave antenna array panel preset for communication may also be used for millimeter wave wireless charging in different time periods, when energy convergence is required for the allocation of the total wireless charging power.

It can be understood that when a plurality of millimeter wave apparatuses are arranged in a distributed manner in the intelligent cabin and each of the plurality of millimeter wave apparatuses includes a plurality of millimeter wave antenna array panels 1051 shown in FIG. 3, functions or purposes may be properly assigned to the millimeter wave antenna array panels in the plurality of millimeter wave apparatuses according to actual operation requirements.

In FIG. 3, a main circuit board 1055 is arranged in the non-specular plate of the interior rearview mirror 104, and devices such as a processor, a memory, a power management device, a radio frequency front end, and a radio frequency modem are arranged on the main circuit board 1055 for signal transmission and reception, processing, storage, and calculation in the millimeter wave apparatus. In addition, a 2G/3G/4G/5G Sub6 antenna 1054 is further arranged in the non-specular plate of the interior rearview mirror 104.

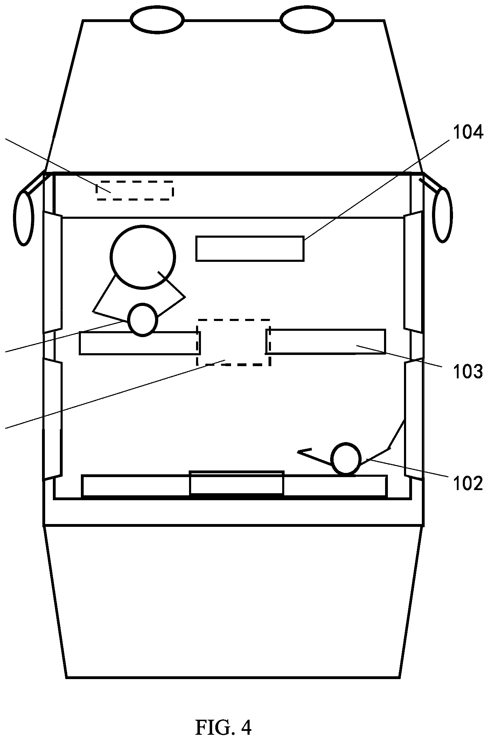

FIG. 4 is a schematic diagram of a millimeter wave apparatus in a centralized configuration in an intelligent cabin of an automobile according to another embodiment of the present disclosure. In FIG. 4, there are a driver 101, a passenger 102, a front passenger seat 103, an interior rearview mirror 104, and the like in the intelligent cabin of the automobile, and a second millimeter wave apparatus 106 is arranged in a dashboard opposite to the driver. When the second millimeter wave apparatus 106 is arranged in the dashboard opposite to the driver, a reconfigurable intelligent surface 201 may be introduced into the intelligent cabin of the automobile, and the reconfigurable intelligent surface 201 may be arranged at the top of the interior of the intelligent cabin above the center of the intelligent cabin, to ensure normal wireless charging of terminal devices in seats other than the driver's seat.

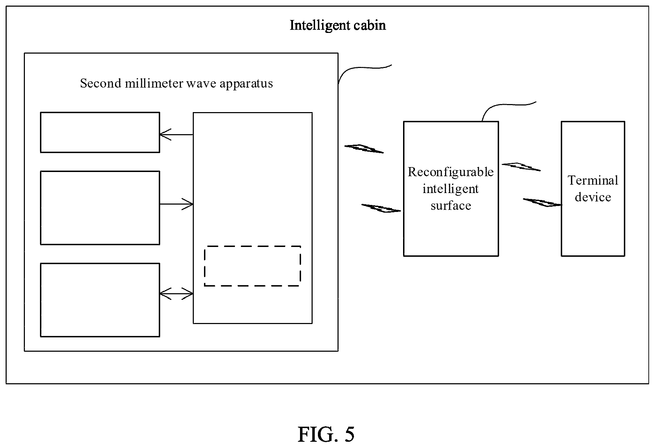

FIG. 5 is a schematic diagram showing the operation of the millimeter wave apparatus in the centralized configuration in the intelligent cabin shown in FIG. 4. In the example of FIG. 5, the second millimeter wave apparatus 106 includes a millimeter wave antenna array with a positioning array element, a positioning module, a millimeter wave wireless charging module, and an intra-cabin device negotiation communication module. The second millimeter wave apparatus 106 is communicatively connected to the reconfigurable intelligent surface 201. The second millimeter wave apparatus 106 transmits a millimeter wave signal to the reconfigurable intelligent surface 201 through beamforming, and controls the reconfigurable intelligent surface 201 to perform phase adjustment to form a plurality of millimeter wave signal beams. The reconfigurable intelligent surface 201 performs beam scanning on terminal devices in the intelligent cabin by using the plurality of millimeter wave signal beams formed, and acquires a millimeter wave point cloud reflected by a target. The reconfigurable intelligent surface 201 reflects the acquired millimeter wave point cloud reflected by the target back to the second millimeter wave apparatus 106. The second millimeter wave apparatus 106 calculates a distance from the target according to the acquired millimeter wave point cloud reflected by the target, or performs 4D imaging processing, and roughly identifies terminal devices from the formed image. In addition, the second millimeter wave apparatus 106 transmits energy to the reconfigurable intelligent surface 201 through beamforming, and controls the reconfigurable intelligent surface 201 to perform phase adjustment on the energy absorbed by the reconfigurable intelligent surface 201 to form a plurality of energy beams. The reconfigurable intelligent surface 201 corresponds the energy beams to different terminal devices, and reflects the energy to the terminal devices to realize wireless charging.

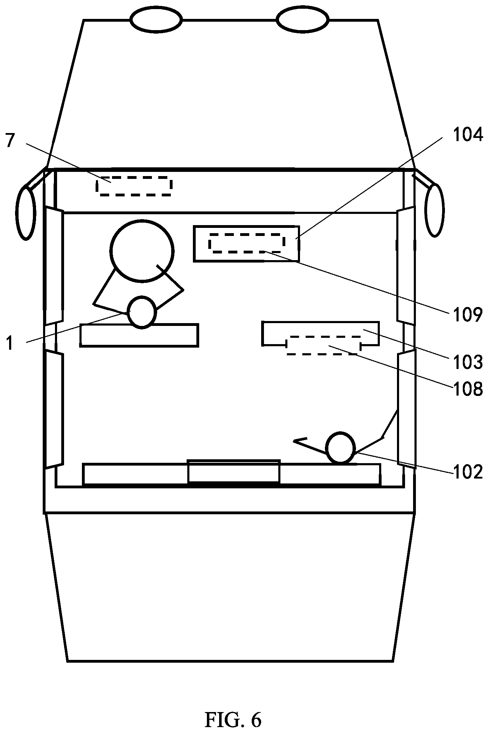

FIG. 6 is a schematic diagram of millimeter wave apparatuses in a distributed configuration in an intelligent cabin of an automobile according to an embodiment of the present disclosure. The distributed configuration requires at least two millimeter wave apparatuses. In the example of FIG. 6, a third millimeter wave apparatus 107, a fourth millimeter wave apparatus 108, and a fifth millimeter wave apparatus 109 are provided in the intelligent cabin of the automobile, which are respectively arranged in a dashboard in front of the driver, in the headrest of a front seat directly in front of a rear seat passenger, and in an interior rearview mirror.

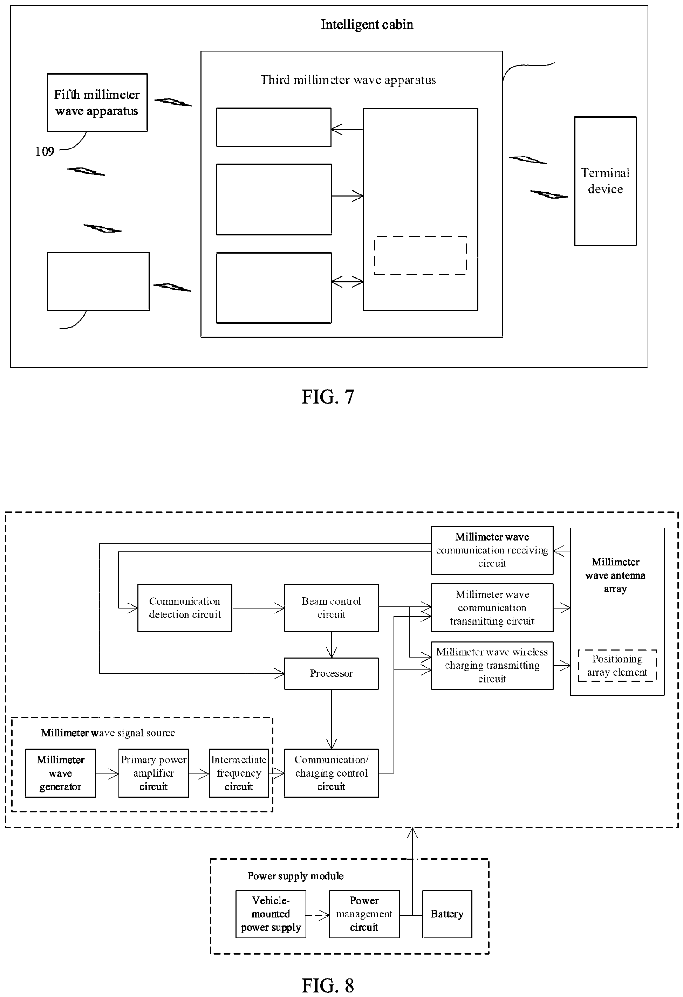

FIG. 7 is a schematic diagram showing the operation of the millimeter wave apparatuses in the distributed configuration in the intelligent cabin shown in FIG. 6. In FIG. 7, there are a driver 101, a passenger 102, a front passenger seat 103, an interior rearview mirror 104, and the like in the intelligent cabin of the automobile. A third millimeter wave apparatus 107, a fourth millimeter wave apparatus 108, and a fifth millimeter wave apparatus 109 that are communicatively connected to each other are also provided in the intelligent cabin of the automobile. In some embodiments, the third millimeter wave apparatus 107 includes a millimeter wave antenna array with a positioning array element, a positioning module, a millimeter wave wireless charging module, and an intra-cabin device negotiation communication module. It can be understood that the fourth millimeter wave apparatus 108 and the fifth millimeter wave apparatus 109 have the same internal functional modules as those of the third millimeter wave apparatus 107. It can be understood that when a plurality of millimeter wave apparatuses are arranged in a distributed manner in the intelligent cabin of the automobile, the millimeter wave apparatuses are communicatively connected to each other to implement coordinated communication. In other words, the plurality of millimeter wave apparatuses form a millimeter wave apparatus group in the intelligent cabin of the automobile, and are assigned different functions to achieve complementary cooperation. For example, the third millimeter wave apparatus 107 may independently implement a positioning function for the terminal devices in the intelligent cabin, the fourth millimeter wave apparatus 108 may independently implement a millimeter wave communication function for the terminal devices, and the fifth millimeter wave apparatus 109 may independently implement a millimeter wave wireless charging function for the terminal devices. It can be understood that the third millimeter wave apparatus 107, the fourth millimeter wave apparatus 108, and the fifth millimeter wave apparatus 109 can also communicate with each other. In this way, general functions can be realized in a rotating manner while avoiding excessive workload for a single millimeter wave apparatus, thereby saving local computing power. In addition, when the centralized configuration is adopted, millimeter wave communication and millimeter wave wireless charging need to be performed in different time periods. When the distributed configuration is adopted, millimeter wave communication and millimeter wave wireless charging do not need to be performed in different time periods, and a better wireless charging effect can be achieved.

It can be understood that application scenarios of the millimeter wave apparatus are not limited to the automobile mentioned in the embodiments of the present disclosure. The application scenarios of the millimeter wave apparatus are not particularly limited in the present disclosure. The millimeter wave apparatus may be configured according to an actual situation, such that the intelligent cabin can control the millimeter wave apparatus to automatically locate and wirelessly charge the terminal devices in the intelligent cabin.

In an embodiment of the present disclosure, when a centralized millimeter wave apparatus is used, one or more millimeter wave antenna arrays may be used in the millimeter wave apparatus. The circuit structure inside the millimeter wave apparatus varies with the quantity of millimeter wave antenna arrays used. FIG. 8 is a schematic diagram of a circuit structure of a millimeter wave apparatus using a millimeter wave antenna array according to an embodiment of the present disclosure. In the schematic diagram of the circuit structure shown in FIG. 8, a millimeter wave antenna array, a millimeter wave communication receiving circuit, a millimeter wave communication transmitting circuit, a millimeter wave wireless charging transmitting circuit, a communication detection circuit, a beam control circuit, a processor, a communication/charging control circuit, a millimeter wave signal source, and a power supply module are used. The millimeter wave signal source includes a millimeter wave generator, a primary power amplifier circuit, and an intermediate frequency circuit. The power supply module includes a power management circuit, a vehicle-mounted power supply, and a battery.

In an embodiment of the present disclosure, the millimeter wave antenna array is respectively electrically connected to an input end of the millimeter wave communication receiving circuit, an output end of the millimeter wave communication transmitting circuit, and an output end of the millimeter wave wireless charging transmitting circuit. In other words, the millimeter wave antenna array is shared by the millimeter wave communication receiving circuit, the millimeter wave communication transmitting circuit, and the millimeter wave wireless charging transmitting circuit. A plurality of millimeter wave communication transmitting circuits operating independently and a plurality of millimeter wave wireless charging transmitting circuits operating independently may be provided. A positioning array element is arranged in the millimeter wave antenna array, which is configured to quickly locate a target person or object by a phase interference method.

An output end of the millimeter wave communication receiving circuit is respectively electrically connected to an input end of the communication detection circuit and an input end of the processor. The millimeter wave communication receiving circuit includes a low noise amplifier, a feeder, an intermediate frequency circuit, an analog-to-digital conversion circuit, etc. The intermediate frequency circuit of the millimeter wave signal source may be reused as the intermediate frequency circuit of the millimeter wave communication receiving circuit. The millimeter wave communication receiving circuit is configured to receive a millimeter wave communication signal from the millimeter wave antenna array, convert the millimeter wave communication signal to a digital signal, and then send the digital signal to the communication detection circuit and the processor, respectively. In an embodiment of the present disclosure, the millimeter wave communication receiving circuit receives the millimeter wave communication signal sent by the millimeter wave antenna array. Next, the low noise amplifier amplifies the received millimeter wave communication signal. Then, the intermediate frequency circuit receives the amplified millimeter wave communication signal through the feeder, performs frequency conversion processing on the amplified millimeter wave communication signal, and inputs the frequency-converted millimeter wave communication signal to the baseband signal. Finally, the analog-to-digital conversion circuit converts the frequency-converted millimeter wave communication signal to a millimeter wave communication digital signal, and sends the millimeter wave communication digital signal to the communication detection circuit and the processor for processing, respectively. The processor performs baseband signal processing on the received millimeter wave communication digital signal. After receiving the millimeter wave communication digital signal, the communication detection circuit performs power detection and sends the signal having subjected to the power detection to the beam control circuit. Under the control of the processor, the beam control circuit performs dynamic beamforming adjustment on the signal having subjected to the power detection, and sends parameters such as a charging power parameter and a millimeter wave beamforming parameter to the millimeter wave communication transmitting circuit and the millimeter wave wireless charging transmitting circuit. In addition, an input end of the millimeter wave communication transmitting circuit and an input end of the millimeter wave wireless charging transmitting circuit are further electrically connected to an output end of the communication/charging control circuit. An input end of the communication/charging control circuit is electrically connected to an output end of the millimeter wave signal source and an output end of the processor, respectively. The millimeter wave signal source includes a millimeter wave signal generator, a preamplifier, and an intermediate frequency circuit. The millimeter wave signal source performs a series of processing to generate a millimeter wave signal that can be effectively transmitted, and sends the millimeter wave signal to the communication/charging control circuit. Under the control of a clock of the processor, the communication/charging control circuit can flexibly configure the millimeter wave wireless charging transmitting circuit and the millimeter wave communication transmitting circuit relative to the millimeter wave antenna array according to a communication requirement and a wireless charging power allocation requirement. In an embodiment of the present disclosure, the communication requirement and the wireless charging power allocation requirement are manifested in a need to temporarily increase or decrease the quantity of millimeter wave communication channels due to the impact of the environment and adjust wireless charging power allocation due to an increase or decrease in the quantity of devices to be wirelessly charged in the automobile. In an embodiment of the present disclosure, the following configuration mode may be adopted: a millimeter wave signal is sent to the millimeter wave wireless charging transmitting circuit and the millimeter wave communication transmitting circuit in different time periods, or part of the millimeter wave wireless charging transmitting circuits operate while part of the millimeter wave communication transmitting circuits operate in the same time period. The millimeter wave communication transmitting circuit includes a duplexer and a first secondary power amplifier circuit, and is configured to transmit a millimeter wave communication signal through the millimeter wave antenna array. The millimeter wave wireless charging transmitting circuit includes a second secondary power amplifier circuit, and is configured to wirelessly charge a mobile terminal of a user in the intelligent cabin through the millimeter wave antenna array. In an embodiment of the present disclosure, the second secondary power amplifier circuit uses gallium nitride with high power density, thereby reducing the quantity of channels and the size of the transmitter end. The processor controls the beam control circuit to perform dynamic beamforming adjustment, and also controls the communication/charging control circuit to coordinate switching between millimeter wave communication signal transmission and millimeter wave wireless charging signal transmission to ensure that millimeter wave communication signal transmission and millimeter wave wireless charging signal transmission can be performed in a coordinated manner.

The power supply module includes a power management circuit, a vehicle-mounted power supply, and an additional battery. The power management circuit is connected to the vehicle-mounted power supply to supply electric energy to circuit modules. Referring to FIG. 8, a dashed line between the vehicle-mounted power supply and the power management circuit indicates that the vehicle-mounted power supply is not a regular power supply, but considering richer communication needs, a battery may be additionally provided.

In an embodiment of the present disclosure, operating bands of the millimeter wave apparatus may include 60 GHz, 77 GHz, and 79 GHz, the antenna array used has a small size, and denser electric cloud data can be captured, so that pitch angle recognition can be provided in addition to conventional distance, speed, and horizontal angle recognition, to implement 4D imaging of terminal devices carried by the driver and passengers in the intelligent cabin.

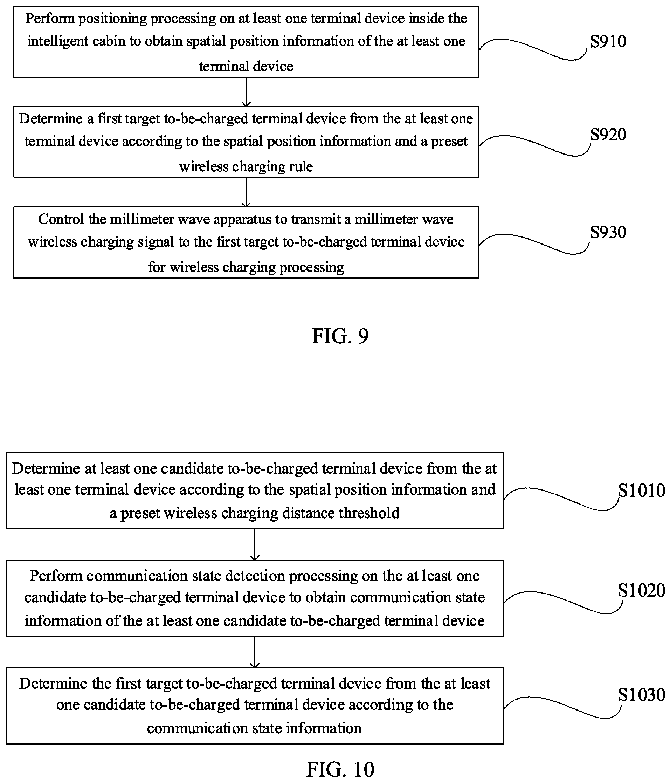

FIG. 9 is a schematic flowchart of a wireless charging method for an intelligent cabin according to an embodiment of the present disclosure. The wireless charging method for an intelligent cabin is applied to an intelligent cabin including a millimeter wave apparatus. The wireless charging method for an intelligent cabin includes, but not limited to, the following steps S910, S920, and S930.

At S910, positioning processing is performed on at least one terminal device inside the intelligent cabin to obtain spatial position information of the at least one terminal device.

In this step, the intelligent cabin performs positioning processing on at least one terminal device inside the intelligent cabin to obtain spatial position information of the at least one terminal device. In an embodiment of the present disclosure, the intelligent cabin controls the millimeter wave apparatus to perform positioning processing on the at least one terminal device inside the intelligent cabin through a millimeter wave beam to obtain spatial position information of the at least one terminal device. In an embodiment of the present disclosure, the millimeter wave apparatus calculates phase interference interpolation between dedicated array elements of the millimeter wave antenna array to realize the positioning of the at least one terminal device and obtain millimeter wave positioning information; and then performs beam control based on the millimeter wave positioning information and information such as reference signal received power detected by the communication detection circuit, to implement accurate beam scanning of the positioning target (i.e., the at least one terminal device). In other words, the millimeter wave apparatus performs coarse scanning and fine scanning in sequence, and quick positioning is implemented first, to avoid introducing fine scanning which involves an excessively large amount of calculation at the beginning.

In an embodiment of the present disclosure, the positioning processing on the at least one terminal device in the intelligent cabin by the millimeter wave apparatus may be performed by the positioning module of the millimeter wave apparatus and a positioning module of the terminal device. For example, the millimeter wave module provides a dedicated phase interference array element to receive antenna beacon broadcasts of Bluetooth, Wi-Fi, etc., of the mobile terminal to realize positioning. However, when a terminal device is turned off, it cannot be positioned through antenna beacon broadcast of Bluetooth, Wi-Fi, etc. Therefore, a terminal device having a millimeter wave receiving coil may be positioned by detecting the millimeter wave receiving coil.

At S920, a first target to-be-charged terminal device is determined from the at least one terminal device according to the spatial position information and a preset wireless charging rule.

In this step, the intelligent cabin uses the millimeter wave apparatus to determine a first target to-be-charged terminal device from the at least one terminal device according to the spatial position information and a preset wireless charging rule. Wireless charging for the driver and passengers in the intelligent cabin of the automobile may be started after the millimeter wave apparatus determines the position of a mobile terminal and aligns a beam with the mobile terminal, or may be started after the position of the mobile terminal is determined. Although millimeter wave transmission itself carries energy, this energy is weak. If communication and wireless charging are performed synchronously, the efficiency will be low. Therefore, in the present disclosure, terminal device positioning and alignment are performed first, a first target to-be-charged terminal device is determined according to a preset wireless charging rule determined in advance, and then energy is converged and transmitted to the first target to-be-charged terminal device for wireless charging. The preset wireless charging rule may be a preset wireless charging distance threshold, a preset priority setting rule, etc. It can be understood that the corresponding preset wireless charging rule may be set according to an actual application scenario.

At S930, the millimeter wave apparatus is controlled to transmit a millimeter wave wireless charging signal to the first target to-be-charged terminal device for wireless charging processing.

In this step, the intelligent cabin controls the millimeter wave apparatus to transmit a millimeter wave wireless charging signal to the first target to-be-charged terminal device for wireless charging processing, to provide electric energy to the terminal device in the intelligent cabin, thereby satisfying the charging demand of the terminal device in the intelligent cabin to a certain extent.

In an embodiment of the present disclosure, the intelligent cabin controls one or more millimeter wave apparatuses to transmit a millimeter wave wireless charging signal(s) to one or more first target to-be-charged terminal devices for wireless charging processing. It can be understood that when there is only one millimeter wave apparatus in the intelligent cabin, the intelligent cabin may control the millimeter wave apparatus to transmit a millimeter wave wireless charging signal to one or more first target to-be-charged terminal devices for wireless charging processing. When there are a plurality of millimeter wave apparatuses in the intelligent cabin, the intelligent cabin may control the plurality of millimeter wave apparatuses to transmit millimeter wave wireless charging signals to one or more first target to-be-charged terminal devices simultaneously or in different time periods according to an actual need for wireless charging processing. In some embodiments, under the control of the intelligent cabin, the plurality of millimeter wave apparatuses may respectively perform different processing, e.g., separately perform communication and interaction processing, separately perform wireless charging processing, and so on.

In an embodiment of the present disclosure, the intelligent cabin includes a reconfigurable intelligent surface, and transmitting a millimeter wave wireless charging signal to the first target to-be-charged terminal device for wireless charging processing includes: sending the millimeter wave wireless charging signal to the reconfigurable intelligent surface, for the reconfigurable intelligent surface to reflect the millimeter wave wireless charging signal to the first target to-be-charged terminal device for wireless charging processing. In an embodiment of the present disclosure, in the intelligent cabin, the millimeter wave apparatus sends a millimeter wave wireless charging signal to the reconfigurable intelligent surface. The reconfigurable intelligent surface performs phase adjustment on the received millimeter wave wireless charging signal to form a plurality of millimeter wave beams, and reflects the millimeter wave beams to the terminal devices for wireless charging processing to improve the precision and efficiency of wireless charging.

In an embodiment of the present disclosure, the millimeter wave apparatus further includes a wireless charging millimeter wave antenna array and a communication millimeter wave antenna array. The wireless charging millimeter wave antenna array is configured to transmit a millimeter wave wireless charging signal to the first target to-be-charged terminal device for wireless charging processing, and the communication millimeter wave antenna array is configured to communicate and interact with the communicable terminal device in the process of determining the first target to-be-charged terminal device from the at least one terminal device according to the spatial position information and the preset wireless charging rule, or to be used to transmit a millimeter wave wireless charging signal to the first target to-be-charged terminal device for wireless charging processing.

A wireless charging method for an intelligent cabin according to an embodiment of the present disclosure is applied to an intelligent cabin including a millimeter wave apparatus. When traveling by commonly used means of transportation (e.g., an automobile or a high-speed train), the driver and passengers will inevitably face the problem that their mobile terminals cannot be charged in a timely manner due to insufficient charging ports in the intelligent cabin. When the millimeter wave apparatus is arranged in the intelligent cabin, the intelligent cabin controls the millimeter wave apparatus to perform positioning processing on the at least one terminal device inside the intelligent cabin to obtain spatial position information of the at least one terminal device, then determines a first target to-be-charged terminal device from the at least one terminal device according to the spatial position information and a preset wireless charging rule, and controls the millimeter wave apparatus to transmit a millimeter wave wireless charging signal to the first target to-be-charged terminal device for wireless charging processing. In this way, a relatively stable, efficient, and convenient wireless charging process is realized, thereby satisfying the charging demand of the terminal device(s) inside the intelligent cabin and improving the travel experience of the driver and passengers.

FIG. 10 is a schematic flowchart of S920 in FIG. 9. Determining a first target to-be-charged terminal device from the at least one terminal device according to the spatial position information and a preset wireless charging rule in S920 includes, but not limited to, the following steps S1010, S1020, and S1030.

At S1010, at least one candidate to-be-charged terminal device is determined from the at least one terminal device according to the spatial position information and a preset wireless charging distance threshold.

In this step, the intelligent cabin determines at least one candidate to-be-charged terminal device from the at least one terminal device according to the spatial position information and a preset wireless charging distance threshold. In an embodiment of the present disclosure, the intelligent cabin acquires a positional distance between the at least one terminal device and the millimeter wave apparatus according to the spatial position information; and determines the at least one candidate to-be-charged terminal device from the at least one terminal device according to the positional distance and the preset wireless charging distance threshold. During wireless charging, when the distance between a terminal device and the millimeter wave apparatus is small, power received by the terminal device is high, and the efficiency of wireless charging is high. When the distance between a terminal device and the millimeter wave apparatus is large, there is inevitably a loss during the propagation process, so power received by the terminal device is low and the efficiency of wireless charging is low. Therefore, the preset wireless charging distance threshold is set, and when the positional distance between a terminal device and the millimeter wave apparatus exceeds the preset wireless charging distance threshold, wireless charging processing is not performed for the terminal device. Therefore, the terminal devices are screened using the preset wireless charging distance threshold to obtain the quantity of candidate to-be-charged terminal devices. The quantity of candidate to-be-charged terminal devices is at least one.

At S1020, communication state detection processing is performed on the at least one candidate to-be-charged terminal device to obtain communication state information of the at least one candidate to-be-charged terminal device.

In this step, the intelligent cabin performs communication state detection processing on the at least one candidate to-be-charged terminal device to obtain communication state information of the at least one candidate to-be-charged terminal device. In an actual scenario, a terminal device may have been shut down due to insufficient electricity before entering the intelligent cabin, so communication state detection processing needs to be performed on the at least one candidate to-be-charged terminal device to obtain communication state information of the at least one candidate to-be-charged terminal device. A beacon broadcast signal (Bluetooth, Wi-Fi, or millimeter wave signal) from the terminal device is detected, and a communication state of the terminal device is determined according to whether the beacon broadcast signal is received. This process may be performed during positioning of the terminal device. In an embodiment of the present disclosure, performing, by the intelligent cabin, communication state detection processing on the at least one candidate to-be-charged terminal device to obtain communication state information of the at least one candidate to-be-charged terminal device includes: determining that the communication state information of the terminal device indicates a communicable state when receiving the beacon broadcast signal sent by the terminal device; and determining that the communication state information of the mobile terminal indicates a non-communicable state when not receiving the beacon broadcast signal sent by the terminal device.

At S1030, the first target to-be-charged terminal device is determined from the at least one candidate to-be-charged terminal device according to the communication state information.

In this step, the intelligent cabin determines the first target to-be-charged terminal device from the at least one candidate to-be-charged terminal device according to the communication state information and the preset wireless charging rule. The intelligent cabin further communicates and interacts with a terminal device in the communicable state through the millimeter wave apparatus, and after determining a target to-be-charged terminal device, performs wireless charging processing for the corresponding terminal device. As such, a relatively stable and flexible wireless charging mode can be achieved.

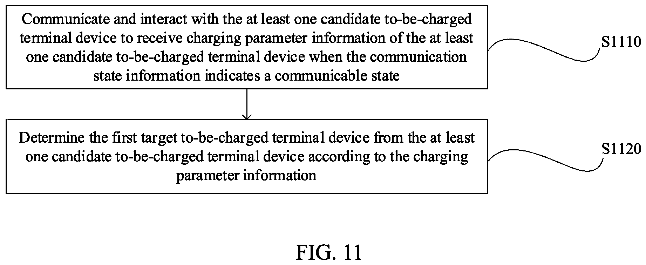

FIG. 11 is a schematic flowchart of S1030 in FIG. 10. Determining the first target to-be-charged terminal device from the at least one candidate to-be-charged terminal device according to the communication state information in S1030 includes, but not limited to, the following steps S1110 and S1120.

At S1110, communication and interaction are performed with the at least one candidate to-be-charged terminal device to receive charging parameter information of the at least one candidate to-be-charged terminal device, in response to the communication state information being a communicable state.

In this step, when the communication state information indicates a communicable state, the intelligent cabin uses the millimeter wave apparatus to perform communication and interaction with the at least one candidate to-be-charged terminal device to receive charging parameter information of the at least one candidate to-be-charged terminal device. In an embodiment of the present disclosure, when the terminal device is in the communicable state, the intelligent cabin uses the millimeter wave apparatus to send a charging parameter query request to the candidate to-be-charged terminal device in the communicable state; and then receives the charging parameter information transmitted by the candidate to-be-charged terminal device in response to the charging parameter inquiry request. It can be understood that the charging parameter information includes an electricity quantity value of the terminal device, and may also include a received power level and a maximum desired received power of the terminal device, etc. The intelligent cabin communicates and negotiates with the at least one terminal device through the millimeter wave apparatus to determine a suitable target to-be-charged terminal device, such that the operating efficiency of the intelligent cabin is improved.

In an embodiment of the present disclosure, in an actual scenario, a terminal device may have been shut down due to insufficient electricity before entering the intelligent cabin, so each of the at least one candidate to-be-charged terminal device is determined as the first target to-be-charged terminal device when the communication state information indicates the non-communicable state. It can be understood that the intelligent cabin re-performs the communication state detection processing after a period of time to obtain updated communication state information of the at least one terminal device, and re-perform subsequent wireless charging processing.

At S1120, the first target to-be-charged terminal device is determined from the at least one candidate to-be-charged terminal device according to the charging parameter information.

In this step, the intelligent cabin determines the first target to-be-charged terminal device from the at least one candidate to-be-charged terminal device according to the charging parameter information. When there are one or more candidate to-be-charged terminal devices, the terminal devices may have different charging demands. If wireless charging processing is performed equally for terminal devices with a low charging demand, the efficiency of wireless charging will be reduced, and requirements of terminal devices with an urgent charging demand cannot be met in a timely manner. Therefore, determining the first target to-be-charged terminal device from the at least one candidate to-be-charged terminal device according to the charging parameter information is beneficial to determining charging priorities of the terminal devices, thereby improving the efficiency of wireless charging.

In an embodiment of the present disclosure, the intelligent cabin first acquires at least one electricity quantity value from the charging parameter information, then determines charging priority information according to the at least one electricity quantity value and a preset priority setting rule, and finally determines the first target to-be-charged terminal device from the at least one candidate to-be-charged terminal device according to the charging priority information. Determining charging priority information according to the at least one electricity quantity value and a preset priority setting rule includes: determining the charging priority information of the at least one candidate to-be-charged terminal device according to the at least one electricity quantity value and a preset electricity quantity threshold when the at least one electricity quantity value is not the same; or acquiring the spatial position information of the at least one candidate to-be-charged terminal device and determining the charging priority information of the at least one candidate to-be-charged terminal device according to the spatial position information and a preset preferential power allocation range, when the at least one electricity quantity value is the same. In an embodiment of the present disclosure, wireless charging processing is first performed for the terminal device(s) with an electricity quantity value lower than the preset electricity quantity threshold for a period of time; the terminal devices with an electricity quantity value higher than the preset electricity quantity threshold are simultaneously charged. When the electricity quantity values of the terminal devices are the same, wireless charging processing is first performed for the terminal device within the range of the driver's seat for a period of time, i.e., wireless charging processing is first performed for the terminal device carried by the driver.

In an embodiment of the present disclosure, when the charging priority information is not valid or the user selects not to enable the charging priority information, all of the candidate to-be-charged terminal devices are determined as the first target to-be-charged terminal devices, and wireless charging processing is equally performed for the first target to-be-charged terminal devices.

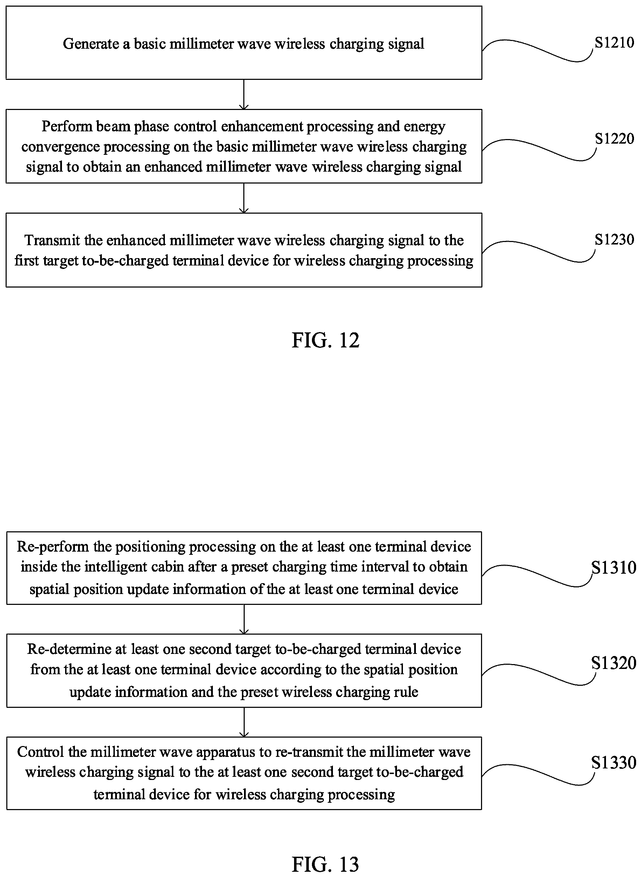

FIG. 12 is a schematic flowchart of S930 in FIG. 9. Controlling the millimeter wave apparatus to transmit a millimeter wave wireless charging signal to the first target to-be-charged terminal device for wireless charging processing in S930 includes, but not limited to, the following steps S1210, S1220, and S1230.

At S1210, a basic millimeter wave wireless charging signal is generated.

In this step, the intelligent cabin controls the millimeter wave apparatus to generate a basic millimeter wave wireless charging signal.

At S1220, beam phase control enhancement processing and energy convergence processing are performed on the basic millimeter wave wireless charging signal to obtain an enhanced millimeter wave wireless charging signal.

In this step, the intelligent cabin controls the millimeter wave apparatus to perform beam phase control enhancement processing and energy convergence processing on the basic millimeter wave wireless charging signal to obtain an enhanced millimeter wave wireless charging signal. In an embodiment of the present disclosure, the intelligent cabin controls the millimeter wave apparatus to acquire quantity information of the first target to-be-charged terminal device(s); obtain a total charging power allocation quota according to the positional distance and the quantity information of the first target to-be-charged terminal device(s); obtain a quantity of millimeter wave transmitting array elements according to the total charging power allocation quota; and perform beam phase control enhancement processing on the basic millimeter wave wireless charging signal, and perform energy convergence processing according to the quantity of millimeter wave transmitting array elements to obtain the enhanced millimeter wave wireless charging signal.

It can be understood that beam phase control enhancement processing on millimeter wave signals and energy convergence are of great importance. The core of the wireless charging function of the millimeter wave apparatus lies in energy convergence. The energy efficiency of wireless charging using an ordinary millimeter wave antenna array or by using a millimeter wave antenna array configured for communication purposes for charging is not high. A dedicated wireless charging millimeter wave antenna array needs to be additionally provided as the main force in wireless charging processing, and gallium nitride with high power density is used to reduce the quantity of channels and the size of the transmitter end. Only some antenna array elements participate in the communication process, while communication and wireless charging antenna array elements all participate in the wireless charging energy convergence process. In other words, the millimeter wave antenna array elements corresponding to the millimeter wave communication transmitting circuit and the millimeter wave wireless charging transmitting circuit all participate in wireless charging through beamforming to achieve energy convergence.

At S1230, the enhanced millimeter wave wireless charging signal is transmitted to the first target to-be-charged terminal device for wireless charging processing.

In this step, the intelligent cabin controls the millimeter wave apparatus to transmit the enhanced millimeter wave wireless charging signal to the first target to-be-charged terminal device for wireless charging processing. It can be understood that during the charging process, the quantity of millimeter wave transmitting array elements from which energy needs to be converged may be dynamically adjusted according to an actual situation to ensure the stability of the wireless charging process for the terminal device.

FIG. 13 is a schematic flowchart of a wireless charging method for an intelligent cabin according to another embodiment of the present disclosure. After controlling the millimeter wave apparatus to transmit a millimeter wave wireless charging signal to the first target to-be-charged terminal device for wireless charging processing in S930, the method includes, but not limited to, the following steps S1310, S1320, and S1330.

At S1310, the positioning processing is re-performed on the at least one terminal device inside the intelligent cabin after a preset charging time interval to obtain spatial position update information of the at least one terminal device.

At S1320, at least one second target to-be-charged terminal device is re-determined from the at least one terminal device according to the spatial position update information and the preset wireless charging rule.

At S1330, the millimeter wave apparatus is controlled to re-transmit the millimeter wave wireless charging signal to the at least one second target to-be-charged terminal device for wireless charging processing.

In an embodiment of the present disclosure, the millimeter wave apparatus includes a wireless charging millimeter wave antenna array and a communication millimeter wave antenna array, and controlling the millimeter wave apparatus to re-transmit the millimeter wave wireless charging signal to the at least one second target to-be-charged terminal device for wireless charging processing includes: acquiring, by the intelligent cabin, quantity information of the at least one second target to-be-charged terminal device; when the quantity information of the at least one second target to-be-charged terminal device is different from the quantity information of the first target to-be-charged terminal device(s), performing wireless charging power allocation processing on the wireless charging millimeter wave antenna array and the communication millimeter wave antenna array according to the quantity information of the at least one second target to-be-charged terminal device to obtain an allocation result; and controlling, according to the allocation result, the wireless charging millimeter wave antenna array and the communication millimeter wave antenna array to re-transmit the millimeter wave wireless charging signal to the at least one second target to-be-charged terminal device for wireless charging processing.

Based on S1310 to S1330, the intelligent cabin re-performs the positioning processing on the at least one terminal device inside the intelligent cabin after a preset charging time interval to obtain spatial position update information of the at least one terminal device. Then, the intelligent cabin re-determines at least one second target to-be-charged terminal device from the at least one terminal device according to the spatial position update information and the preset wireless charging rule. Finally, the intelligent cabin controls the millimeter wave apparatus to re-transmit the millimeter wave wireless charging signal to the at least one second target to-be-charged terminal device for wireless charging processing. In an actual travel scenario, the change of the spatial positions of the terminal devices in the intelligent cabin is irregular, and the communication states of the terminal devices will also change. Therefore, the intelligent cabin re-performs the positioning processing and the wireless charging processing for the at least one terminal device inside the intelligent cabin after a preset charging time interval, to adapt to an actual communication interaction demand and wireless charging demand, thereby improving the precision and efficiency of wireless charging. As such, wireless charging processing can be implemented more flexibly to reduce the waste of power resources and realize a relatively stable, efficient, and convenient wireless charging process to adapt to and meet the charging demand of the terminal device(s) inside the intelligent cabin according to the communication requirement and the wireless charging power allocation requirement, thereby improving the travel experience of the driver and passengers.

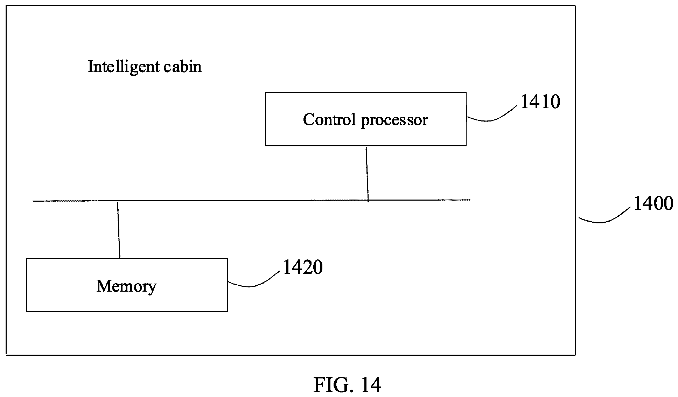

FIG. 14 is a schematic diagram of an intelligent cabin according to an embodiment of the present disclosure. The intelligent cabin 1400 according to the embodiment of the present disclosure includes one or more control processors 1410 and one or more memories 1420. FIG. 14 uses one control processor 1410 and one memory 1420 as an example. The control processor 1410 and the memory 1420 may be connected by a bus or in other ways. Connection by a bus is used as an example in FIG. 14.

The memory 1420, as a non-transitory computer-readable storage medium, may be configured for storing a non-transitory software program and a non-transitory computer-executable program. In addition, the memory 1420 may include a high-speed random access memory, and may also include a non-transitory memory, e.g., at least one magnetic disk storage device, flash memory device, or other non-transitory solid-state storage device. In some implementations, the memory 1420 may include memories located remotely from the control processor 1410, and the remote memories may be connected to the intelligent cabin 1400 via a network. Examples of the network include, but not limited to, the Internet, an intranet, a local area network, a mobile communication network, and combinations thereof.

Those having ordinary skills in the art may understand that the apparatus structure shown in FIG. 14 does not constitute a limitation to the intelligent cabin 1400, and the intelligent cabin may include more or fewer components than those shown in the figure, or some components may be combined, or a different component arrangement may be used.

The non-transitory software program and instructions required to implement the wireless charging method for an intelligent cabin of the foregoing embodiments are stored in the memory 1420 which, when executed by the control processor 1410, cause the processor 1410 to implement the wireless charging method for an intelligent cabin of the foregoing embodiments, for example, implement the method steps S910 to S930 in FIG. 9, the method steps S1010 to S1030 in FIG. 10, the method steps S1110 to S1120 in FIG. 11, the method steps S1210 to S1230 in FIG. 12, or the method steps S1310 to S1330 in FIG. 13.

The apparatus embodiments described above are merely examples. The units described as separate components may or may not be physically separated, i.e., they may be located in one place or may be distributed over a plurality of network units. Some or all of the modules may be selected according to actual needs to achieve the objectives of the scheme of this embodiment.

In addition, an embodiment of the present disclosure provides a computer-readable storage medium, storing a computer-executable instruction which, when executed by one or more control processors, for example, by a control processor 1410 in FIG. 14, may cause the one or more control processors 1410 to implement the wireless charging method for an intelligent cabin in the above embodiments, for example, implement the method steps S910 to S930 in FIG. 9, the method steps S1010 to S1030 in FIG. 10, the method steps S1110 to S1120 in FIG. 11, the method steps S1210 to S1230 in FIG. 12, or the method steps S1310 to S1330 in FIG. 13.

The embodiments of the present disclosure include: performing, by the intelligent cabin, positioning processing on at least one terminal device inside the intelligent cabin to obtain spatial position information of the at least one terminal device; determining a first target to-be-charged terminal device from the at least one terminal device according to the spatial position information and a preset wireless charging rule; and controlling the millimeter wave apparatus to transmit a millimeter wave wireless charging signal to the first target to-be-charged terminal device for wireless charging processing. According to the scheme of the embodiments of the present disclosure, the intelligent cabin performs positioning processing on at least one terminal device inside the intelligent cabin to obtain spatial position information of the at least one terminal device; then determines a first target to-be-charged terminal device from the at least one terminal device according to the spatial position information and a preset wireless charging rule; and controls the millimeter wave apparatus to transmit a millimeter wave wireless charging signal to the first target to-be-charged terminal device for wireless charging processing. In other words, in the scheme of the embodiments of the present disclosure, the intelligent cabin controls the millimeter wave apparatus to automatically locate and wirelessly charge the terminal device(s) inside the intelligent cabin to realize a relatively stable, efficient, and convenient wireless charging process, thereby satisfying the charging demand of the terminal device(s) inside the intelligent cabin and improving the travel experience of the driver and passengers.

Those having ordinary skills in the art can understand that all or some of the steps in the methods disclosed above and the functional modules/units in the system and the apparatus may be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A wireless charging method for an intelligent cabin, applied to an intelligent cabin comprising a millimeter wave apparatus, the method comprising:
performing positioning processing on at least one terminal device inside the intelligent cabin to obtain spatial position information of the at least one terminal device;
determining a first target to-be-charged terminal device from the at least one terminal device according to the spatial position information and a preset wireless charging rule; and
controlling the millimeter wave apparatus to transmit a millimeter wave wireless charging signal to the first target to-be-charged terminal device for wireless charging processing.

2. The wireless charging method for an intelligent cabin of claim 1, wherein determining a first target to-be-charged terminal device from the at least one terminal device according to the spatial position information and a preset wireless charging rule comprises:
determining at least one candidate to-be-charged terminal device from the at least one terminal device according to the spatial position information and a preset wireless charging distance threshold;
performing communication state detection processing on the at least one candidate to-be-charged terminal device to obtain communication state information of the at least one candidate to-be-charged terminal device; and
determining the first target to-be-charged terminal device from the at least one candidate to-be-charged terminal device according to the communication state information.

3. The wireless charging method for an intelligent cabin of claim 2, wherein determining the first target to-be-charged terminal device from the at least one candidate to-be-charged terminal device according to the communication state information comprises:
performing communication and interaction with the at least one candidate to-be-charged terminal device to receive charging parameter information of the at least one candidate to-be-charged terminal device in response to the communication state information indicating a communicable state; and
determining the first target to-be-charged terminal device from the at least one candidate to-be-charged terminal device according to the charging parameter information.

4. The wireless charging method for an intelligent cabin of claim 3, wherein performing communication and interaction with the at least one candidate to-be-charged terminal device to receive charging parameter information of the at least one candidate to-be-charged terminal device in response to the communication state information indicating a communicable state comprises:
sending a charging parameter query request to the candidate to-be-charged terminal device in the communicable state; and
receiving the charging parameter information sent by the candidate to-be-charged terminal device in response to the charging parameter query request.

5. The wireless charging method for an intelligent cabin of claim 3, wherein determining the first target to-be-charged terminal device from the at least one candidate to-be-charged terminal device according to the charging parameter information comprises:
acquiring at least one electricity quantity value from the charging parameter information;
determining charging priority information according to the at least one electricity quantity value and a preset priority setting rule; and
determining the first target to-be-charged terminal device from the at least one candidate to-be-charged terminal device according to the charging priority information.

6. The wireless charging method for an intelligent cabin of claim 5, wherein determining charging priority information according to the at least one electricity quantity value and a preset priority setting rule comprises:
determining the charging priority information of the at least one candidate to-be-charged terminal device according to the at least one electricity quantity value and a preset electricity quantity threshold in response to the at least one electricity quantity value being not the same; or
acquiring the spatial position information of the at least one candidate to-be-charged terminal device and determining the charging priority information of the at least one candidate to-be-charged terminal device according to the spatial position information and a preset preferential power allocation range, in response to the at least one electricity quantity value being the same.

7. The wireless charging method for an intelligent cabin of claim 2, wherein determining the first target to-be-charged terminal device from the at least one candidate to-be-charged terminal device according to the communication state information further comprises:
determining each of the at least one candidate to-be-charged terminal device as the first target to-be-charged terminal device in response to the communication state information indicating a non-communicable state.

8. The wireless charging method for an intelligent cabin of claim 2, wherein determining at least one candidate to-be-charged terminal device from the at least one terminal device according to the spatial position information and a preset wireless charging distance threshold comprises:
acquiring a positional distance between the at least one terminal device and the millimeter wave apparatus according to the spatial position information; and
determining the at least one candidate to-be-charged terminal device from the at least one terminal device according to the positional distance and the preset wireless charging distance threshold.

9. The wireless charging method for an intelligent cabin of claim 1, wherein controlling the millimeter wave apparatus to transmit a millimeter wave wireless charging signal to the first target to-be-charged terminal device for wireless charging processing comprises:
controlling one or more millimeter wave apparatuses to transmit a millimeter wave wireless charging signal to one or more first target to-be-charged terminal devices for wireless charging processing.

10. The wireless charging method for an intelligent cabin of claim 1 or 9, wherein controlling the millimeter wave apparatus to transmit a millimeter wave wireless charging signal to the first target to-be-charged terminal device for wireless charging processing comprises:
generating a basic millimeter wave wireless charging signal;
performing beam phase control enhancement processing and energy convergence processing on the basic millimeter wave wireless charging signal to obtain an enhanced millimeter wave wireless charging signal; and
transmitting the enhanced millimeter wave wireless charging signal to the first target to-be-charged terminal device for wireless charging processing.

11. The wireless charging method for an intelligent cabin of claim 10, wherein performing beam phase control enhancement processing and energy convergence processing on the basic millimeter wave wireless charging signal to obtain an enhanced millimeter wave wireless charging signal comprises:
acquiring quantity information of the first target to-be-charged terminal device;
obtaining a total charging power allocation quota according to the positional distance and the quantity information of the first target to-be-charged terminal device;
obtaining a quantity of millimeter wave transmitting array elements according to the total charging power allocation quota; and
performing beam phase control enhancement processing on the basic millimeter wave wireless charging signal, and performing energy convergence processing according to the quantity of millimeter wave transmitting array elements to obtain the enhanced millimeter wave wireless charging signal.

12. The wireless charging method for an intelligent cabin of claim 1, wherein the intelligent cabin comprises a reconfigurable intelligent surface, and transmitting a millimeter wave wireless charging signal to the first target to-be-charged terminal device for wireless charging processing comprises:
sending the millimeter wave wireless charging signal to the reconfigurable intelligent surface, for the reconfigurable intelligent surface to reflect the millimeter wave wireless charging signal to the first target to-be-charged terminal device for wireless charging processing.

13. The wireless charging method for an intelligent cabin of any one of claims 1 to 12, further comprising:
re-performing the positioning processing on the at least one terminal device inside the intelligent cabin after a preset charging time interval to obtain spatial position update information of the at least one terminal device;
re-determining at least one second target to-be-charged terminal device from the at least one terminal device according to the spatial position update information and the preset wireless charging rule; and
controlling the millimeter wave apparatus to re-transmit the millimeter wave wireless charging signal to the at least one second target to-be-charged terminal device for wireless charging processing.

14. The wireless charging method for an intelligent cabin of claim 13, wherein the millimeter wave apparatus comprises a wireless charging millimeter wave antenna array and a communication millimeter wave antenna array, and controlling the millimeter wave apparatus to re-transmit the millimeter wave wireless charging signal to the at least one second target to-be-charged terminal device for wireless charging processing comprises:
acquiring quantity information of the at least one second target to-be-charged terminal device;
in response to the quantity information of the at least one second target to-be-charged terminal device being different from the quantity information of the first target to-be-charged terminal device, performing wireless charging power allocation processing on the wireless charging millimeter wave antenna array and the communication millimeter wave antenna array according to the quantity information of the at least one second target to-be-charged terminal device to obtain an allocation result; and
controlling, according to the allocation result, the wireless charging millimeter wave antenna array and the communication millimeter wave antenna array to re-transmit the millimeter wave wireless charging signal to the at least one second target to-be-charged terminal device for wireless charging processing.

15. The wireless charging method for an intelligent cabin of claim 1, wherein the millimeter wave apparatus further comprises a wireless charging millimeter wave antenna array and a communication millimeter wave antenna array, wherein the wireless charging millimeter wave antenna array is configured to transmit a millimeter wave wireless charging signal to the first target to-be-charged terminal device for wireless charging processing, and the communication millimeter wave antenna array is configured to communicate and interact with a communicable terminal device in the process of determining the first target to-be-charged terminal device from the at least one terminal device according to the spatial position information and the preset wireless charging rule, or to be configured to transmit a millimeter wave wireless charging signal to the first target to-be-charged terminal device for wireless charging processing.

16. An intelligent cabin, comprising: a memory, a processor, and a computer program stored in the memory and executable by the processor, wherein the computer program, when executed by the processor, causes the processor to perform the wireless charging method for an intelligent cabin of any one of claims 1 to 15.

17. A computer-readable storage medium, storing a computer-executable instruction which, when executed by a processor, causes the processor to perform the wireless charging method for an intelligent cabin of any one of claims 1 to 15.
